# EUROPEAN PATENT APPLICATION

(11) **EP 1 734 084 A1**
(43) Date of publication of application: **20.12.2006**
(21) Application number: 06115243.5
(22) Date of filing: 09.06.2006
(51) Int. Cl.: C09B 67/50, G03G 5/06, C09B 47/04, C09B 47/08, C09B 67/12, C09B 67/16

(54) **Hydroxygallium phthalocyanines**

(30) Priority: 16.06.2005 US 154447
(71) Applicant: Xerox Corporation, Rochester, New York 14644 (US)
(72) Inventor: Chambers, John S, Rochester, NY 14620 (US); Lopez, Francisco J. Lopez, Rochester, NY 14620 (US); Liang-Bih, Lin, Rochester, NY 14618 (US); Levy, Daniel V., Rochester, NY 14607 (US)
(74) Representative: Jones, Helen M.M.

(57) **Abstract**

Methods for preparing Type V hydroxygallium phthalocyanine are provided.

## Description

### BACKGROUND

The present disclosure relates to phthalocyanine dyes or pigments for use in photoreceptors and, more particularly, to methods for the production of hydroxy gallium phthalocyanines.

Hydroxygallium phthalocyanine (HOGaPc) pigments are currently utilized in photoreceptors. HOGaPc polymorphs are known, including the Type V polymorph, also known as Type V hydroxygallium phthalocyanine or Type V HOGaPc. U.S. Patent Nos. 5,521,306 and 5,473,064 describe HOGaPc and processes to prepare Type V HOGaPc. Type V HOGaPc has been characterized by its intense diffraction peaks at Bragg angles 7.5, 9.9, 12.5, 16.3, 18.6, 21.9, 23.9, 25.1, and 283, with the highest peak at 7.5 degrees 20 (2 theta ±0.2°) in the X-ray diffraction spectrum. HOGaPc is most responsive at a range of, for example, from about 550 nanometers to about 880 nanometers and is generally unresponsive to the light spectrum below about 500 nanometers. Typical wavelengths for photogeneration may be from about 600 nanometers and about 850 nanometers and may include a broadband between the two wavelengths. Single wavelength exposure may be from about 750 nanometers to about 850 nanometers.

There are certain drawbacks associated with the use of HOGaPc, including high dark decay and a tendency of inducing charge deficient spots (CDS). Large HOGaPc particles in the charge generation layer may be a cause of these problems, which results in poor image quality.

Therefore, HOGaPc pigments made of smaller particles, and thus possessing a larger surface area are desirable. Such pigments should also possess high sensitivity. It is expected that raw pigments having a higher surface area would result in charge generation layers with pigments having finer particle sizes, as the conversion of raw pigments, such as Type I polymorph of HOGaPc to the Type V polymorph, only changes surface properties of the crystal and not crystal size.

### SUMMARY

The present disclosure provides processes for forming hydroxygallium phthalocyanines. The process of the present disclosure includes contacting a gallium phthalocyanine in an acid solution with a basic aqueous media, and contacting the resulting mixture with at least two solvents selected from at least two different groups. The different groups utilized in the solvent system include polar aprotic solvents, esters, and ketones.

In embodiments, the processes of the present disclosure include contacting an alkoxy-bridged gallium phthalocyanine in an acid solution including hydrogen halides and oxyacids of halogens with aqueous ammonia to form a pigment slurry. The pigment slurry is concentrated by filtration to obtain a pigment filtrate, which is contacted with at least two solvents selected from at least two different groups. The different groups of solvents include polar aprotic solvents such as N,N-dimethylformamide, N-methylpyrrolidone, dimethyl sulfoxide, acetonitrile, and mixtures thereof, esters such as n-butyl acetate, ethyl acetate, and mixtures thereof, and ketones such as acetone, methyl ethyl ketone, methyl isobutyl ketone, and mixtures thereof.

The present disclosure also provides photoreceptors having a photogenerating layer including a resin and a photogenerating component. The photogenerating component includes a hydroxygallium phthalocyanine prepared by contacting a gallium phthalocyanine in an acid solution with a basic aqueous media, and contacting the resulting mixture with at least two solvents selected from at least two different groups. The different groups utilized in the solvent system include polar aprotic solvents, esters, and ketones.

### BRIEF DESCRIPTION OF THE DRAWINGS

Various embodiments of the present disclosure will be described herein below with reference to the figures wherein:

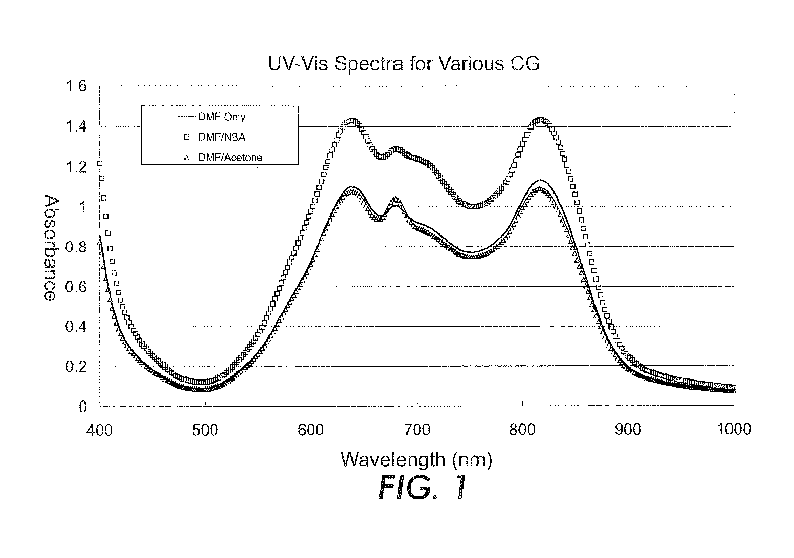

FIG. 1 is a graph depicting the absorbance spectra of Type V HOGaPc polymorphs prepared in accordance with the present disclosure with conventionally prepared Type V HOGaPc polymorphs;
FIG. 2 is an X-ray diffraction spectrum obtained of a Type V HOGaPc sample prepared in DMF/acetone and subjected to sonocrystallization;
FIG. 3 is an X-ray diffraction spectrum obtained of a Type V HOGaPc sample prepared in DMF and subjected to sonocrystallization;
FIG. 4 is an X-ray diffraction spectrum obtained of a Type V HOGaPc sample prepared in DMF/acetone and subjected to sonocrystallization; and
FIG. 5 is an X-ray diffraction spectrum obtained of a Type V HOGaPc sample prepared in DMF without sonocrystallization.

### EMBODIMENTS

The present disclosure provides processes for the preparation of hydroxygallium phthalocyanine, especially the Type V polymorph. The method of the present disclosure converts Type I HOGaPc to high surface area Type V HOGaPc. High surface area Type V HOGaPc refers, in embodiments, for example to HOGaPc having a surface area from about 5 m2/g to about 120 m2/g, in embodiments from about 30 m2/g to about 80 m2/g. The methods of the present disclosure result in a reduction in the particle size and/or agglomerate size of the Type I HOGaPc, which aids in achieving the desired smaller particle size and particle size distribution of the Type V HOGaPc. Because of the smaller particle size, there is a reduction in the production milling time usually by about 50%, in embodiments from about 10% to about 50%, in embodiments from about 20% to about 40%, and excellent print quality is achieved.

In accordance with the present disclosure, a mixed solvent system may be utilized to convert Type I HOGaPc to Type V HOGaPc. While previous methods utilize one solvent (e.g. DMF) in the conversion process, the mixed solvent system of the present disclosure allows for a controlled conversion of Type I HOGaPc to Type V HOGaPc which yields a smaller and more uniform Type V HOGaPc pigment. The combined solvents of the solvent system include an excellent conversion solvent with a poor one, which allows for a more uniform crystal size and structure. The ratio between the excellent conversion and poor conversion solvents can be adjusted for a proper conversion rate so that uniform particle size and crystal structure can be obtained.

The solvent system of the present disclosure may be utilized to convert a Type I HOGaPc obtained by any method. In embodiments, the Type I HOGaPc may be obtained by a process disclosed in U.S. Patent No. 5,473,064. Such a process includes, in embodiments, a process for the preparation of hydroxygallium phthalocyanine, essentially free of a halide like chlorine, whereby a pigment precursor Type I halogallium phthalocyanine, in embodiments a chlorogallium phthalocyanine, is prepared by the reaction of gallium chloride in a solvent, such as N-methylpyrrolidone, present in an amount of from about 10 parts to about 100 parts, in embodiments from about 15 to about 25 parts, and in embodiments about 19 parts, with 1,3-diiminoisoindoline in an amount of from about 1 part to about 10 parts, in embodiments about 4 parts of 1,3-diiminoisoindoline, for each part of gallium chloride that is reacted; hydrolyzing the pigment precursor chlorogallium phthalocyanine Type I by standard methods, for example acid pasting, whereby the pigment precursor is dissolved in concentrated sulfuric acid and then reprecipitated in a solvent, such as water, or a dilute ammonia solution, for example from about 10 to about 15 percent, to obtain the resulting hydrolyzed pigment hydroxygallium phthalocyanine Type I.

In embodiments, the process of the present disclosure also includes the conversion of Type I hydroxygallium phthalocyanine to Type V hydroxygallium phthalocyanine wherein the Type I hydroxygallium phthalocyanine is prepared by the hydrolysis of a dimer. This process includes the dissolution of 1 part gallium chloride in from about 1 part to about 100 parts, in embodiments from about 5 parts to about 15 parts, of an organic solvent. Suitable organic solvents include, for example, aromatics including benzene, toluene, xylene and the like. The reaction can occur at a temperature of from about 0° C to about 100° C, in embodiments at a temperature of from about 20°C to about 30°C, to form a solution of gallium chloride. The gallium chloride solution is contacted with from about 1 part to about 5 parts, in embodiments from about 2 parts to about 4 parts, of an alkali metal alkoxide such as sodium methoxide, sodium ethoxide, sodium propoxide or the like, in embodiments in a solution form, to produce a gallium alkoxide solution and an alkali metal salt byproduct, for example sodium chloride. The reaction can occur at a temperature of from about 0° C to about 100° C, in embodiments at a temperature of from about 20° C to about 40° C.

The alkali metal salt byproduct may be removed from the resulting gallium alkoxide solution by reaction with from about 1 part to about 10 parts, in embodiments from about 2 parts to about 6 parts, orthophthalodinitrile or 1,3-diiminoisoindolene, and a diol, such as 1,2-ethanediol (ethylene glycol), 1,2-propanediol (propylene glycol) or 1,3-propanediol, in an amount of from about 3 parts to about 100 parts, in embodiments from about 5 parts to about 15 parts, for each part of gallium alkoxide formed. The reaction can occur at a temperature of from about 150° C to about 220° C, in embodiments at a temperature of from about 185° C to about 205° C, for a period of from about 30 minutes to about 6 hours, in embodiments from about 1 hour to about 3 hours, to provide an alkoxy-bridged gallium phthalocyanine dimer pigment precursor. This dimer pigment may be isolated by filtration at a temperature of from about 20° C to about 180° C, in embodiments from about 100°C to about 140° C.

The dimer precursor may then be added to a concentrated acid, such as sulfuric acid, hydrogen halides including hydrochloric acid (HCl), hydrobromic acid (HBr), hydroiodic acid (HI), oxyacids of halogens including chloric acid (HClO3), perchloric acid (HClO4), bromic acid (HBrO3), perbromic acid (HBrO4), iodic acid (HIO3), periodic acid (HIO4), nitric acid, and/or trifluoroacetic acid, to form a solution. Halogenated organic solvents may be added to dissolve the dimer, wherein the volume/volume ratio of the acid to the halogenated solvent is from about 1/10 to about 10/1, in embodiments from about 1/1 to about 5/1. Examples of halogenated solvents include methylene chloride, chloroform, 1,2-dichloroethane, 1,1,2-tricloroethane, and monochlorobenzene. The alkoxy-bridged gallium phthalocyanine dimer pigment can be dissolved in the concentrated acid in an amount of from about 1 weight part to about 100 weight parts, in embodiments from about 25 weight parts to about 75 weight parts, by stirring said pigment in the acid for an effective period of time, from about one minute to about 24 hours, in embodiments from about 2 hours to about 4 hours. The temperature of the solution can be from about 0°C to about 75°C, in embodiments from about 40°C to about 60°C, in air or under an inert atmosphere such as argon or nitrogen. The resulting pigment slurry may be filtered through a 5 µm glass filter to remove any insoluble pigments.

The resulting pigment slurry is added at a controlled rate to a solvent and reprecipitated in a basic aqueous media in what may be referred to, in embodiments, as an acid pasting step. The solvent may include aqueous solvents, such as aqueous hydroxides for example ammonia, aqueous sodium hydroxide, and the like. These solvents may be utilized in a wash to reprecipitate and provide an alkoxy-bridged gallium phthalocyanine dimer. Each different diol used for the phthalocyanine synthesis will produce a particular alkoxy-bridged gallium phthalocyanine dimer product, as determined by, for example, infrared (IR) spectroscopy, nuclear magnetic resonance (NMR) and X-ray powder diffraction pattern (XRD). In embodiments, where sulfuric acid is utilized to dissolve the alkoxy-bridged gallium phthalocyanine, the resulting dissolved pigment may be reprecipitated in aqueous ammonia to form a pigment slurry.
The basic solution may be of from about 3 molar to about 15 molar concentration, in embodiments of from about 6 molar to about 10 molar concentration, selecting from about 1 volume part to about 10 volume parts of the basic solution for each volume part of acid that was used.

The solvents may be chilled while being stirred during pigment precipitation in order to maintain a temperature of from about -20°C to about 40°C, in embodiments from about 0°C to about 10°C, during pigment precipitation. The resulting pigment may be isolated by, for example, filtration. In embodiments, the filtrate may be washed with deionized water to obtain a filtrate of a neutral pH.

The resulting hydroxygallium phthalocyanine possesses X-ray diffraction patterns having major peaks at Bragg angles (2 theta ± 0.2°) of 6.8, 7.0, 13.5, 16.6, 23.8, 26.7, and 28.1 referred to, in embodiments, as Type I hydroxygallium phthalocyanine.

The Type I hydroxygallium phthalocyanine product obtained can be contacted or treated with a solvent system of the present disclosure. The solvent system may include at least two of a polar aprotic solvent, an ester and/or a ketone. Suitable polar aprotic solvents include N,N-dimethylformamide, N-methylpyrrolidone, dimethyl sulfoxide, acetonitrile, mixtures thereof, and the like. Suitable esters include n-butyl acetate, ethyl acetate, mixtures thereof, and the like. Suitable ketones include acetone, methyl ethyl ketone, methyl isobutyl ketone, mixtures thereof, and the like.

The polar aprotic solvent may be present in the solvent system in an amount from about 1 percent to about 99 percent by weight of the solvent system, in embodiments from about 20 percent to about 80 percent by weight of the solvent system. The ester may be present in the solvent system in an amount from about 1 percent to about 99 percent by weight of the solvent system, in embodiments from about 20 percent to about 50 percent by weight of the solvent system. The ketone may be present in the solvent system in an amount from about 5 percent to about 80 percent by weight of the solvent system, in embodiments from about 10 percent to about 67 percent by weight of the solvent system. In embodiments, the components of the solvent system, for example the polar aprotic solvent, ester and/or ketone, add up to about 100 percent by weight of the solvent system. In embodiments, the solvent system may include a polar aprotic solvent and ester, a polar aprotic solvent and ketone, an ester and ketone, or a polar aprotic solvent, ester, and ketone.

At least two of the solvents are independently selected from the above three classes to form the solvent system of the present disclosure, in embodiments from about 2 to about 7 solvents may be utilized, in embodiments from about 3 to about 5 solvents may be utilized, as long as one solvent is from a different class of solvents than the other solvent(s).

Contacting the Type I HOGaPc with the solvent system of the present disclosure forms a Type V hydroxygallium phthalocyanine polymorph.

The Type I HOGaPc may be contacted with the solvent system of the present disclosure, optionally by, for example, stirring, ball milling or otherwise contacting said Type I hydroxygallium phthalocyanine pigment with the aforementioned solvent system in the absence or presence of grinding media such as stainless steel shot, spherical or cylindrical ceramic media, or spherical glass beads. The Type I HOGaPc product may be combined with the solvent system and grinding media at a temperature of from about 0°C to about 40°C, in embodiments from about 10°C to about 30°C, for a period of from about 2 hours to about 2 weeks, in embodiments from about 72 hours to about 1 week, with constant rolling speed from about 30 rpm to about 150 rpm, in embodiments from about 50 rpm to about 70 rpm.

In embodiments, the Type I HOGaPc may be placed in the solvent system and combined with glass beads for milling. Suitable glass beads include, for example, from about 1 mm to about 6 mm soda lime glass beads (Glen Mills, Inc., Clifton, NJ), and borosilicate glass beads (HiBea D20 from Ohara Inc., Kanagawa, Japan). From about 2 grams to about 100 grams of Type I HOGaPc, in embodiments from about 5 grams to about 7 grams of the Type I HOGaPc, may be contacted with from about 16 grams to about 800 grams DMF, in embodiments from about 40 grams to about 80 grams DMF, with from about 60 grams to about 3000 grams of beads, in embodiments from about 160 grams to about 200 grams of beads, and milled from about 2 hours to about 2 weeks, in embodiments from about 72 hours to about 1 week, with constant rolling speeds from about 30 rpm to about 150 rpm, in embodiments from about 50 rpm to about 70 rpm.

The resulting high surface area Type V HOGaPc may be separated from the mixture by washing with DMF, acetone, or mixtures thereof followed by filtration. The Type V polymorph may then be dried under vacuum at a temperature of from about 50°C to about 95°C, in embodiments from about 65°C to about 80°C and then crushed utilizing ball milling, rotary milling, and the like.

The resulting Type V HOGaPc possesses an X-ray diffraction pattern having major peaks at Bragg angles (2 theta ± 0.2°) of 7.2, 10, 16.8, 18.6, 24, 25.3, 26.8, 28.3, 32.5 and with the highest peak at 7.2 degrees 2Θ.

The surface area of the resulting Type V hydroxygallium phthalocyanine can be from about 5 m2/g to about 120 m2/g, in embodiments from about 30 m2/g to about 80 m2/g. The high surface area of the Type V hydroxygallium phthalocyanine of the present disclosure may contribute to pigment dispersibility when the pigment is combined with a resin to form a photogenerating layer of a photoreceptor.

Methods which may be utilized to determine the surface area of the HOGaPc include, for example, the Brunauer, Emmett and Teller (BET) method or mercury porosimetry. In embodiments, a multi point BET method using nitrogen as the adsorbate may be utilized.

In the BET process, about 0.5 grams of a sample may be weighed into analysis vessels. The samples may be degassed at about 50°C under full vacuum overnight, in embodiments from about 12 to about 20 hours, prior to analysis. The surface area may be determined using nitrogen as the adsorbate gas at 77 Kelvin (LN2), over a relative pressure range of from about 0.08 to about 0.25 using a Micromeritics ASAP 2405 surface area instrument. The surface area is the BET surface area minus the micropore area. Micropores are pores with a diameter of 20 angstroms or less. Micropore areas may be calculated for the HOGaPc pigments using the Harkins and Jura method over the specified thickness range of 6 to 10 angstroms. The surface area obtained by this method is comparable to the surface area as determined by mercury porosimetry.

In embodiments, sonocrystallization may be utilized to achieve the desired pigment size of the resulting Type V HOGaPc. Sonocrystallization includes, for example, the use of ultrasound technology to induce nucleation in crystal formation, which may result in the production of crystals having a smaller size. For example, the Type I hydroxygallium phthalocyanine may be mixed with N-dimethylformamide and, after agitated in a roller for a period of time from about 20 minutes to about 120 minutes, in embodiments from about 30 minutes to about 90 minutes, acetone may be added. Subsequently, power ultrasound of from about 0.5 to about 10 MHz, in embodiments of from about 1 to about 5 MHz, may be applied to the Type I hydroxygallium phthalocyanine in combination with the solvent system of the present disclosure, and then glass beads may be added and the container rolled at from about 30 to about 150 revolutions per minute, in embodiments from about 50 to about 120 revolutions per minute, for a time from about 30 hours to about 200 hours, in embodiments from about 80 hours to about 160 hours. The resultant slurry may be collected by separating the beads and slurry and washing same with N-dimethylformamide followed by acetone in a suction filter. The resulting pigment may then be vacuum dried at from about 50° C to about 100° C for a time from about 6 to about 48 hours.

The Type V hydroxygallium phthalocyanine obtained according to the present disclosure exhibits excellent properties in photoresponsive imaging members when used as a pigment, in particular, lower print background, lower charge deficient spots (CDS), lower dark decay and better cyclic stability compared to lower surface area Type V hydroxygallium phthalocyanine obtained via previously utilized processes, for example, from dimer or other gallium phthalocyanine precursors such as, for example, chlorogallium phthalocyanine.

The hydroxygallium phthalocyanine pigments produced in accordance with the present disclosure may be combined with a resin to form a charge generation layer of a photoreceptor. Examples of suitable resins for use in preparing the dispersion include thermoplastic and thermosetting resins such as polycarbonates, polyesters including poly(ethylene terephthalate), polyurethanes including poly(tetramethylene hexamethylene diurethane), polystyrenes including poly(styrene-co-maleic anhydride), polybutadienes including polybutadiene―graft-poly(methyl acrylate-co-acrylontrile), polysulfones including poly(1,4-cyclohexane sulfone), polyarylethers including poly(phenylene oxide), polyarylsulfones including poly(phenylene sulfone), polyethersulfones including poly(phenylene oxide-co-phenylene sulfone), polyethylenes including poly(ethylene-co-acrylic acid), polypropylenes, polymethylpentenes, polyphenylene sulfides, polyvinyl acetates, polyvinylbutyrals, polysiloxanes including poly(dimethylsiloxane), polyacrylates including poly(ethyl acrylate), polyvinyl acetals, polyamides including poly(hexamethylene adipamide), polyimides including poly(pyromellitimide), amino resins including poly(vinyl amine), phenylene oxide resins including poly(2,6-dimethyl-1,4-phenylene oxide), terephthalic acid resins, phenoxy resins including poly(hydroxyethers), epoxy resins including poly([(o-cresyl glycidyl ether)-co-formaldehyde], phenolic resins including poly(4-tert-butylphenol-co-formaldehyde), polystyrene and acrylonitrile copolymers, polyvinylchlorides, polyvinyl alcohols, poly-N-vinylpyrrolidinones, vinylchloride and vinyl acetate copolymers, carboxyl-modified vinyl chloride/vinyl acetate copolymers, hydroxyl-modified vinyl chloride/vinyl acetate copolymers, carboxyl- and hydroxyl -modified vinyl chloride/vinyl acetate copolymers, acrylate copolymers, alkyd resins, cellulosic film formers, poty(amidcimide), styrenebutadiene copolymers, vinylidenechloride-vinylchloride copolymers, vinylacetate-vinylidenechloride copolymers, styrene-alkyd resins, polyvinylcarbazoles, and the like, and mixtures thereof. These polymers may be block, random, or alternating copolymers.

Examples of suitable polycarbonates which may be utilized to form the charge generation layer dispersion include, but are not limited to, poly(4,4'-isopropylidene diphenyl carbonate) (also referred to as bisphenol A polycarbonate), poly(4,4'-diphenyl-1,1'-cyclohexane carbonate) (also referred to as bisphenol Z polycarbonate, polycarbonate Z, or PCZ), poly(4,4'-sulfonyl diphenyl carbonate) (also referred to as bisphenol S polycarbonate), poly(4,4'-ethylidene diphenyl carbonate) (also referred to as bisphenol E polycarbonate), poly(4,4'-methylidene diphenyl carbonate) (also referred to as bisphenol F polycarbonate), poly(4,4'-(1,3-phenylenediisopropylidene)diphenyl carbonate) (also referred to as bisphenol M polycarbonate), poly(4,4'-(1,4-phenylenediisopropylidene)diphenyl carbonate) (also referred to as bisphenol P polycarbonate), poly(4,4'-hexafluoroisppropylidene diphenyl carbonate).

Examples of suitable vinyl chlorides and vinyl acetates which may be utilized to form the dispersion utilized to form the charge generation layer include, but are not limited to, carboxyl-modified vinyl chloride/vinyl acetate copolymers such as VMCH (available from Dow Chemical) and hydroxyl-modified vinyl chloride/vinyl acetate copolymers such as VAGF (available from Dow Chemical).

The molecular weight of the resin used to form the charge generation layer may be from about 10,000 to about 100,000, in embodiments from about 15,000 to about 50,000.

In embodiments, a single resin may be utilized to form the charge generation layer. In other embodiments, a mixture of more than one of the above resins can be used to form the charge generation layer. Where more than one resin is utilized, the number of resins can be from about 2 to about 4, in embodiments from about 2 to about 3.

A liquid or liquid mixture may be used in preparing the charge generation layer. A liquid mixture may include from about 2 to about 4 liquids, in embodiments from about 2 to about 3 liquids. In embodiments, the liquid is a solvent for the resin, but not the high surface area Type V HOGaPc of the present disclosure. The resin may be added to the liquid, in embodiments a solvent for the resin, to form a solution and the pigment then added to the solution to form a dispersion suitable for forming the charge generation layer. The liquid utilized should not substantially disturb or adversely affect other layers of the photoreceptor, if any. Examples of liquids that can be utilized in preparing the charge generation layer include, but are not limited to, ketones, alcohols, aromatic hydrocarbons, halogenated aliphatic hydrocarbons, ethers, amines, amides, esters, mixtures thereof, and the like. Specific illustrative examples include cyclohexanone, acetone, methyl ethyl ketone, methanol, ethanol, butanol, amyl alcohol, toluene, xylene, monochlorobenzene, carbon tetrachloride, chloroform, methylene chloride, trichloroethylene, tetrahydrofuran, dioxane, diethyl ether, dimethyl formamide, dimethyl acetamide, butyl acetate, ethyl acetate, methoxyethyl acetate, mixtures thereof, and the like.

The resin in a liquid, which is a solvent for the resin, is combined with the Type V HOGaPc of the present disclosure. Any suitable technique may be utilized to disperse the Type V HOGaPc in the resin or resins. The dispersion containing the pigment may be formed using, for example, attritors, ball mills, Dynomills, paint shakers, homogenizers, microfluidizers, mechanical stirrers, in-line mixers, ultrasonic processor, Cavipro processor, or by any other suitable milling techniques.

Specific dispersion techniques which may be utilized include, for example, ball milling, roll milling, milling in vertical or horizontal attritors, sand milling, and the like. The solids content of the mixture being milled can be selected from a wide range of concentrations. Milling times using a ball roll mill may be from about 6 hours to about 6 days, in embodiments from about 8 hours to about 3 days. However, as noted above, in embodiments milling of large particles is not required as the methods of the present disclosure result in Type V HOGaPc having a high surface area.

The amount of resin in the dispersion can be from about 95 % by weight to about 15 % by weight of the solids, in embodiments from about 65 % by weight to about 20 % by weight of the solids. The amount of pigment in the dispersion can be from about 5 % by weight to about 85 % by weight of the dispersion solids, in embodiments from about 35 % by weight to about 80 % by weight of the dispersion solids. The expression "solids" refers to the total pigment and resin components of the dispersion.

Any suitable and conventional technique may be utilized to apply the dispersion of the present disclosure to form a charge generation layer on another layer of a photoreceptor. Suitable coating techniques include dip coating, roll coating, spray coating, rotary atomizers, and the like.

The charge generation layer containing the pigments of the present disclosure and the resinous material may be of a thickness from about 0.05 µm to about 5 µm, in embodiments from about 0.1 µm to about 1 µm, although the thickness can be outside these ranges. The charge generation layer thickness is related to the relative amounts of pigment and resin, with the pigment often being present in amounts from about 5 to about 80 percent by weight, in embodiments from about 45 to about 70 percent by weight. Higher resin content compositions generally require thicker layers for photogeneration. Generally, it may be desirable to provide this layer in a thickness sufficient to absorb about 90 percent or more of the incident radiation which is directed upon it in the imagewise or printing exposure step. The maximum thickness of this layer depends upon factors such as mechanical considerations, the thicknesses of the other layers, and whether a flexible photoconductive imaging member is desired.

The dispersions of the present disclosure may be utilized to form charge generation layers in conjunction with any known configuration for photoreceptors, including single and multi-layer photoreceptors. Examples of multi-layer photoreceptors include those described in U.S. Patent Nos. 6,800,411, 6,824,940, 6,818,366, 6,790,573, and U.S. Patent Application Publication No. 20040115546. Photoreceptors may possess a charge generation layer (CGL), also referred to herein as a photogenerating layer, and a charge transport layer (CTL). Other layers, including a substrate, an electrically conductive layer, a charge blocking or hole blocking layer, an adhesive layer, and/or an overcoat layer, may also be present in the photoreceptor.

Suitable substrates which may be utilized in forming a photoreceptor include opaque or substantially transparent substrates, and may include any suitable organic or inorganic material having the requisite mechanical properties.

The substrate may be flexible, seamless, or rigid and may be of a number of different configurations such as, for example, a plate, a cylindrical drum, a scroll, an endless flexible belt, a web, and the like.

The thickness of the substrate layer may depend on numerous factors, including mechanical performance and economic considerations. For rigid substrates, the thickness of the substrate can be from about 0.3 millimeters to about 10 millimeters, in embodiments from about 0.5 millimeters to about 5 millimeters. For flexible substrates, the substrate thickness can be from about 65 to about 200 micrometers, in embodiments from about 75 to about 100 micrometers, for optimum flexibility and minimum stretch when cycled around small diameter rollers of, for example, 19 millimeter diameter. The entire substrate can be made of an electrically conductive material, or the electrically conductive material can be a coating on a polymeric substrate.

Substrate layers selected for the imaging members of the present disclosure, and which substrates can be opaque or substantially transparent, may include a layer of insulating material including inorganic or organic polymeric materials such as MYLAR® (a commercially available polymer from DuPont), MYLAR® containing titanium, a layer of an organic or inorganic material having a semiconductive surface layer, such as indium tin oxide or aluminum arranged thereon, or a conductive material inclusive of aluminum, chromium, nickel, brass, or the like.

Any suitable electrically conductive material can be employed with the substrate. Suitable electrically conductive materials include copper, brass, nickel, zinc, chromium, stainless steel, conductive plastics and rubbers, aluminum, semi-transparent aluminum, steel, cadmium, silver, gold, zirconium, niobium, tantalum, vanadium, hafnium, titanium, nickel, chromium, tungsten, molybdenum, paper rendered conductive by the inclusion of a suitable material therein, or through conditioning in a humid atmosphere to ensure the presence of sufficient water content to render the material conductive, indium, tin, metal oxides, including tin oxide and indium tin oxide, and the like.

After formation of an electrically conductive surface, a hole blocking layer may optionally be applied to the substrate layer. Generally, hole blocking layers (also referred to as charge blocking layers) allow electrons from the conductive layer to migrate toward the charge generation layer. Any suitable blocking layer capable of forming an electronic barrier to holes between the adjacent charge generation layer and the underlying conductive layer of the substrate may be utilized. Suitable blocking layers include those disclosed, for example, in U.S. Patent Nos. 4,286,033, 4,291,110 and 4,338,387. Similarly, illustrated in U.S. Patent Nos. 6,255,027, 6,177,219, and 6,156,468, are, for example, photoreceptors containing a hole blocking layer of a plurality of light scattering particles dispersed in a binder resin. For example, Example 1 of U.S. Patent No. 6,156,468 discloses a hole blocking layer of titanium dioxide dispersed in a linear phenolic binder.

Hole blocking layers utilized for negatively charged photoreceptors may include, for example, polyamides including LUCKAMIDE® (a nylon type material derived from methoxymethyl-substituted polyamide commercially available from Dai Nippon Ink), hydroxy alkyl methacrylates, nylons, gelatin, hydroxyl alkyl cellulose, organopolyphosphazines, organosilanes, organotitanates, organozirconates, metal oxides of titanium, chromium, zinc, tin, silicon, and the like. In embodiments the hole blocking layer may include nitrogen containing siloxanes. Nitrogen containing siloxanes may be prepared from coating solutions containing a hydrolyzed silane. Hydrolyzable silanes include 3-aminopropyl triethoxy silane, N,N'-dimethyl 3-amino) propyl triethoxysilane, N,N-dimethylamino phenyl triethoxy silane, N-phenyl aminopropyl trimethoxy silane, trimethoxy silylpropyldiethylene triamine and mixtures thereof.

In embodiments, the hole blocking components may be combined with phenolic compounds, a phenolic resin, or a mixture of more than one phenolic resin, for example, from about 2 to about 4 phenolic resins. Suitable phenolic compounds which may be utilized may contain at least two phenol groups, such as bisphenol A (4,4'-isopropylidenediphenol), bisphenol E (4,4'-ethylidenebisphenol), bisphenol F (bis(4-hydroxyphenyl)methane), bisphenol M (4,4'-(1,3-phenylenediisopropylidene)bisphenol), bisphenol P (4,4'-(1,4-phenylene diisopropylidene)bisphenol), bisphenol S (4,4'-sulfonyldiphenol), and bisphenol Z (4,4'-cyclohexylidenebisphenol), hexafluorobisphenol A (4,4'-(hexafluoro isopropylidene)diphenol), resorcinol, hydroxyquinone, catechin, and the like.

The hole blocking layer may be applied as a coating on a substrate or electrically conductive layer by any suitable conventional technique such as spraying, die coating, dip coating, draw bar coating, gravure coating, silk screening, air knife coating, reverse roll coating, vacuum deposition, chemical treatment, and the like. For convenience in obtaining thin layers, the blocking layers may be applied in the form of a dilute solution, with the solvent being removed after deposition of the coating by conventional techniques such as by vacuum, heating and the like. Drying of the deposited coating may be effected by any suitable conventional technique such as oven drying, infrared radiation drying, air drying and the like.

The blocking layer may be continuous and have a thickness of from about 0.01 micrometers to about 30 micrometers, in embodiments from about 0.1 micrometers to about 20 micrometers.

An optional adhesive layer may be applied to the hole blocking layer. Any suitable adhesive layer known in the art may be utilized including, but not limited to, polyesters, polyamides, poly(vinyl butyral), poly(vinyl alcohol), polyurethane and polyacrylonitrile. Where present, the adhesive layer may be, for example, of a thickness of from about 0.001 micrometers to about 2 micrometers, in embodiments from about 0.01 micrometers to about 1 micrometer. Optionally, the adhesive layer may contain effective suitable amounts, for example from about 1 weight percent to about 10 weight percent, of conductive and nonconductive particles, such as zinc oxide, titanium dioxide, silicon nitride, carbon black, and the like, to provide further desirable electrical and optical properties to the photoreceptor of the present disclosure. Conventional techniques for applying an adhesive layer coating mixture to the hole blocking layer include spraying, dip coating, roll coating, wire wound rod coating, gravure coating, die coating and the like. Drying of the deposited coating may be effected by any suitable conventional technique such as oven drying, infrared radiation drying, air drying and the like.

In embodiments the photoreceptor also includes a charge transport layer attached to the charge generation layer. The charge transport layer may include a charge transport or hole transport molecule (HTM) dispersed in an inactive polymeric material. These compounds may be added to polymeric materials which are otherwise incapable of supporting the injection of photogenerated holes from the charge generation layer and incapable of allowing the transport of these holes therethrough. The addition of these HTMs converts the electrically inactive polymeric material to a material capable of supporting the direction of photogenerated holes from the charge generation layer and capable of allowing the transport of these holes through the charge transport layer in order to discharge the surface charge on the charge transport layer.

Suitable polymers for use in forming the charge transport layer are known film forming resins. Examples include those polymers utilized to form the charge generation layer. In embodiments resin materials for use in forming the charge transport layer are electrically inactive resins including polycarbonate resins having a weight average molecular weight from about 20,000 to about 150,000, in embodiments from about 50,000 about 120,000. Electrically inactive resin materials which may be utilized in the charge transport layer include poly(4,4'-dipropylidene-diphenylene carbonate) with a weight average molecular weight of from about 35,000 to about 40,000, available as LEXAN® 145 from General Electric Company; poly(4,4'-propylidene-diphenylene carbonate) with a weight average molecular weight of from about 40,000 to about 45,000, available as LEXAN® 141 from the General Electric Company; a polycarbonate resin having a weight average molecular weight of from about 50,000 to about 100,000, available as MAKROLON® from Farbenfabricken Bayer A.G.; a polycarbonate resin having a weight average molecular weight of from about 20,000 to about 50,000 available as MERLON® from Mobay Chemical Company; and a polycarbonate resin having a weight average molecular weight of from about 20,000 to about 80,000 available as PCZ from Mitsubishi Chemicals. Solvents such as methylene chloride, tetrahydrofuran, toluene, monochlorobenzene, or mixtures thereof, may be utilized in forming the charge transport layer coating mixture.

Any suitable charge transporting or electrically active molecules may be employed as HTMs in forming a charge transport layer on a photoreceptor. Suitable charge transporting molecules include, for example, aryl amines as disclosed in U.S. Patent No. 4,265,990. In embodiments, an aryl amine charge hole transporting component may be represented by: 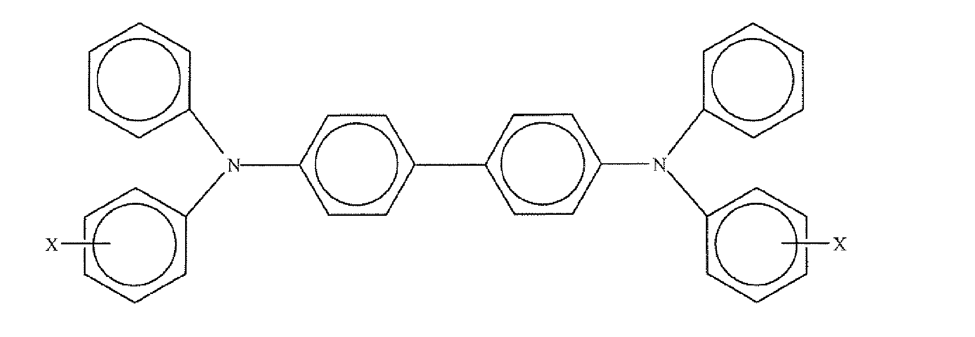 wherein X can be alkyl, halogen, alkoxy or mixtures thereof. In embodiments, the halogen is a chloride. Alkyl groups may contain, for example, from about 1 to about 10 carbon atoms and, in embodiments, from about 1 to about 5 carbon atoms. Examples of suitable aryl amines include, but are not limited to, N,N'-diphenyl-N,N'-bis(alkylphenyl)-1,1-biphenyl-4,4'-diamine, wherein the alkyl may be methyl, ethyl, propyl, butyl, hexyl, and the like; and N,N'-diphenyl-NN'-bis(halophenyl)-1,1'-biphenyl-4,4'-diamine, wherein the halo may be a chloro, bromo, fluoro, and the like substituent.

Other suitable aryl amines which may be utilized as an HTM in a charge transport layer include, but are not limited to, tritolylamine, N,N'-bis(3,4 dimethylphenyl)-N"(1-biphenyl)amine, 2-bis((4'-methylphenyl)amino-p-phenyl) 1,1-diphenyl ethylene, 1-bisphenyl-diphenylamino-1-propene, triphenylmethane, bis(4-diethylamine-2-methylphenyl)phenylmethane, 4'-4"-bis(diethylamino)-2',2"-dimethyltriphenylmethane, N,N'-bis(alkylphenyl)-[1,1'-biphenyl]-4,4'-diamine wherein the alkyl is, for example, methyl, ethyl, propyl, n-butyl, etc., N,N'-diphenyl-N,N'-bis(3"-methylphenyl)-(1,1'-biphenyl)-4,4'-diamine, and the like.

The weight ratio of the polymer resin to charge transport molecules in the resulting charge transport layer can be, for example, from about 30/70 to about 80/20. In embodiments the weight ratio of the polymer resin to charge transport molecules can be from about 35/65 to about 75/25, in embodiments from about 40/60 to about 70/30.

Any suitable and conventional technique may be utilized to mix the polymer resin in combination with the hole transport material and apply same as a charge transport layer to a photoreceptor. In embodiments, it may be advantageous to add the polymer resin and hole transport material to a solvent to aid in formation of a charge transport layer and its application to a photoreceptor. Examples of solvents which may be utilized include aromatic hydrocarbons, aliphatic hydrocarbons, halogenated hydrocarbons, ethers, amides and the like, or mixtures thereof. In embodiments, a solvent such as cyclohexanone, cyclohexane, chlorobenzene, carbon tetrachloride, chloroform, methylene chloride, trichloroethylene, toluene, tetrahydrofuran, dioxane, dimethyl formamide, dimethyl acetamide and the like, may be utilized in various amounts. Application techniques of the charge transport layer include spraying, slot or slide coating, dip coating, roll coating, wire wound rod coating, and the like. Drying of the deposited coating may be effected by any suitable conventional technique such as oven drying, infrared radiation drying, air drying and the like.

The thickness of the charge transport layer can be from about 2 micrometers and about 50 micrometers, in embodiments from about 10 micrometers to about 35 micrometers. The charge transport layer should be an insulator to the extent that the electrostatic charge placed on the charge transport layer is not conducted in the absence of illumination at a rate sufficient to prevent formation and retention of an electrostatic latent image thereon. In general, the ratio of the thickness of the charge transport layer to the charge generation layer, where present, is in embodiments from about 2:1 to 200:1 and in some instances as great as 400:1.

The charge generation layer, charge transport layer, and other layers may be applied in any suitable order to produce either positive or negative charging photoreceptors. For example, the charge generation layer may be applied prior to the charge transport layer, as illustrated in U.S. Patent No. 4,265,990, or the charge transport layer may be applied prior to the charge generation layer, as illustrated in U.S. Patent No. 4,346,158. When used in combination with a charge transport layer, the charge generation layer may be sandwiched between a conductive surface and a charge transport layer or the charge transport layer may be sandwiched between a conductive surface and a charge generation layer.

Optionally, an overcoat layer may be applied to the surface of a photoreceptor to improve resistance to abrasion. In some cases, an anti-curl back coating may be applied to the side of the substrate opposite the active layers of the photoreceptor (i.e., the CGL and CTL) to provide flatness and/or abrasion resistance where a web configuration photoreceptor is fabricated. These overcoating and anti-curl back coating layers are known and may include thermoplastic organic polymers or inorganic polymers that are electrically insulating or slightly semi-conductive. For example, overcoat layers may be fabricated from a dispersion including a particulate additive in a resin. Suitable particulate additives for overcoat layers include metal oxides including aluminum oxide, non-metal oxides including silica or low surface energy polytetrafluoroethylene, and mixtures thereof. Suitable resins include those described above as suitable for charge generation layers and/or charge transport layers, for example, polyvinyl acetates, polyvinylbutyrals, polyvinylchlorides, vinylchloride and vinyl acetate capalytners, carboxyl-modified vinyl chloride/vinyl acetate copolymers, hydroxyl-modified vinyl chloride/vinyl acetate copolymers, carboxyl- and hydroxyl-modified vinyl chloride/vinyl acetate copolymers, polyvinyl alcohols, polycarbonates, polyesters, polyurethanes, polystyrenes, polybutadienes, polysulfones, polyarylethers, polyarylsulfones, polyethersulfones, polyethylenes, polypropylenes, polymethylpentenes, polyphenylene sulfides, polysiloxanes, polyacrylates, polyvinyl acetals, polyamides, polyimides, amino resins, phenylene oxide resins, terephthalic acid resins, phenoxy resins, epoxy resins, phenolic resins, polystyrene and acrylonitrile copolymers, poly-N-vinylpyrrolidinones, acrylate copolymers, alkyd resins, cellulosic film formers, poly(amideimide), styrenebutadiene copolymers, vinylidenechloride-vinylchloride copolymers, vinylacetate-vinylidenechloride copolymers, styrene-alkyd resins, polyvinylcarbazoles, and mixtures thereof. Overcoatings may be continuous and have a thickness from about 0.5 micrometers to about 10 micrometers, in embodiments from about 2 micrometers to about 6 micrometers.

An example of an anti-curl backing layer is described in U.S. Patent No. 4,654,284. In embodiments, it may be desirable to coat the back of the substrate with an anticurl layer such as, for example, polycarbonate materials commercially available as MAKROLON® from Bayer Material Science. The thickness of anti-curl backing layers should be sufficient to substantially balance the total forces of the layer or layers on the opposite side of the supporting substrate layer. A thickness for an anti-curl backing layer from about 10 micrometers to about 100 micrometers, in embodiments from about 15 micrometers to about 50 micrometers, is a satisfactory range for flexible photoreceptors.

Processes of imaging, especially xerographic imaging and printing, are also encompassed by the present disclosure. More specifically, photoreceptors of the present disclosure can be selected for a number of different known imaging and printing processes including, for example, electrophotographic imaging processes, especially xerographic imaging and printing processes wherein charged latent images are rendered visible with toner compositions of an appropriate charge polarity. In embodiments, the imaging members may be sensitive in the wavelength region of, for example, from about 500 to about 900 nanometers, typically from about 650 to about 850 nanometers; thus diode lasers can be selected as the light source. Moreover, the imaging members of this disclosure may be useful in color xerographic applications, particularly high-speed color copying and printing processes.

The following Examples are being submitted to illustrate embodiments of the present disclosure. These Examples are intended to be illustrative only and are not intended to limit the scope of the present disclosure. Also, parts and percentages are by weight unless otherwise indicated.

### EXAMPLES

### EXAMPLE 1

About 3 grams of the Type I polymorph of HOGaPc was placed into a 125 ml amber bottle with about 30 grams of dimethylformamide (DMF) and about 120 grams of 1 mm diameter HiBea borosilicate glass beads manufactured by Ohara Inc., Kanagawa, Japan. Two more samples were prepared in the same fashion, but about 50% of the DMF was replaced with n-butyl acetate (NBA) in one sample and acetone in another. Each sample was roll milled at about 150 revolutions/minute for about 48 hours. Each sample was then collected with suction filtration through a 5 µm fritted glass filter and rinsed with NBA. The pigment cake was then dried under about 30 Torr vacuum at about 85° C for about 12 hours. The resulting pigment was the Type V polymorph of HOGaPc.

About 2.5 grams of each of the Type V polymorphs of HOGaPc produced following the procedures outlined above (with DMF, DMF/NBA, and DMF/acetone) were mixed with about 32.5 grams of a carboxyl-modified vinyl chloride/vinyl acetate copolymer (VMCH, commercially available from Dow Chemical) in NBA at a concentration of about 5% such that the pigment resin ratio was about 60:40 and the resulting dispersion had a solids content of about 12%.

The dispersion was charged into a lab size attritor with about 130 mm of 1 mm diameter glass beads. The dispersion was monitored for particle size reduction by relative scattering index (RSI). RSI is about 100 times the ratio between the absorbance at about 830 nm to the absorbance at about 1000 nm. Absorbance was obtained utilizing a U-2000 UV-spectrometer by Hitachi. The particle size reduction was deemed finished when the RSI value was from about 13 to about 10. Once the RSI value was about 13 to about 10, the dispersion was diluted to about 5% solids content with NBA and filtered through 20 µm filter cloth.

The resultant dispersion was dip coated on an aluminum drum. The drum was coated with about a 1.1 µm zirconium silane undercoat layer having acetylacetonate tributoxy zirconium, (aminopropyl)trimethoxysilane, and polyvinyl butyral at a thickness of about 1 µm. A charge transport layer including a charge transporting molecule of N,N'-diphenyl-N,N'-bis(alkylphenyl)-1,1-biphenyl-4,4'-diamine and a polycarbonate was dip coated at a thickness of about 15 µm and the resulting drums were tested for their electrical properties and print quality.

The following data below in Table 1 was obtained for the drums coated as described above with the different Type V HOGaPc dispersions.

**Table 1**

| Sample | RSI | B/A | Milling Time (hr) |
|---|---|---|---|
| DMF only | 6.70 | 0.892 | 1 |
| DMF/NBA | 6.34 | 0.997 | 1 |
| DMF/Acetone | 7.76 | 0.856 | 2 |

The RSI (relative scattering index) values are a relative score of particle size in a dispersion. The smaller the RSI, the lower the particle size. While conventional HOGaPc dispersions are usually milled so that they possess a RSI value of about 10, all of the above samples had RSI values below 8. The DMF/NBA sample milled to a lower RSI value than DMF alone.

The results of RSI and B to A peak ratio suggest that nominal to smaller particles can be obtained by dual solvent conversion of hydroxygallium phthalocyanine pigment, in comparison to conventional single solvent conversion. The DMF/NBA exhibited a B/A peak ratio of about 1. In addition, while HOGaPc pigments generally possess peak A at from about 826 nm to about 840 nm, the DMF/NBA sample of this Example exhibited a peak shift towards the smaller wavelength and produced a peak A at a wavelength of about 816 nm. The peak shift seen in the absorption spectra is an indication of particle size change and a blue shift represents a smaller particle size.

The xerographic electrical properties of the above prepared photoconductive imaging members was determined by electrostatically charging the surfaces thereof with a corona discharge source until the surface potentials, as measured by a capacitively coupled probe attached to an electrometer, attained an initial value Vo of about -700 volts. After resting for about 0.25 seconds in the dark, the charged members attained a surface potential of Vddp, dark development potential. Each member was then exposed to light from a filtered Xenon lamp thereby inducing a photodischarge which resulted in a reduction of surface potential.

Photosensitivity for these dispersions was determined by dV/dX, the initial slope of a photoinduced discharge characteristics curve, plotted as surface potential (V) of the imaging member versus exposure energy in units of ergs/cm2 (X). Residual potential (RP) was the surface potential of an imaging member after being exposed to an erase light. Dark Decay Rate (DDR) of the imaging member was the loss in surface potential for a given time (V/sec.) The pull rate was the rate of application of the coating of the charge generation layer in mm/sec; the higher the number, the thicker the charge generation layer. Print quality (PQ) was visually evaluated utilizing an empirical standard with a numerical rating of 1 to 7 (a lower rating indicating better print quality than a higher rating).

**Table 2**

| Device | Pullrate (mm/sec) | dV/dX (Vcm²/ergs) | RP (V) | DDR (V/sec) | PQ (score) |
|---|---|---|---|---|---|
| DMF only | 150 | 222 | 11 | 61 | 2.5 |
| DMF only | 200 | 239 | 10 | 61 | 2 |
| DMF/NBA | 150 | 237 | 11 | 63 | 3 |
| DMF/NBA | 200 | 255 | 9 | 65 | 3 |
| DMF/Acetone | 150 | 230 | 9 | 58 | 2 |
| DMF/Acetone | 200 | 247 | 8 | 32 | 2.5 |

As can be seen in Table 2, the dual solvent system of the present disclosure did not deteriorate electrical performance as normal photosensitivity (depicted by dV/dX in Table 2) and residual potential (RP) were obtained from devices with dual solvent converted pigments, in comparison to that of single solvent converted pigments.

### EXAMPLE 2

Sonocrystallization was utilized to improve pigment dispersibility when combined with co-solvents of DMF and acetone. About three grams of crude hydroxygallium phthalocyanine (Type I) was mixed with about 30 grams of N-dimethylformamide in a 120 ml glass bottle and agitated in a roller for about 30 minutes to about 60 minutes. After agitation, about 30 grams of acetone was added. One sample was prepared in DMF alone. Power ultrasound of about 1 to about 5 MHz was then applied to the solution for about 30 minutes, and then about 130 grams of 1 mm diameter glass beads were added and the container was rolled at about 50 to about 120 revolutions per minute for a time from about 80 to about 160 hours. One sample was prepared in DMF with no sonocrystallization.

The resultant slurry was collected by separating the beads and slurry and washed with from about 150 to about 400 ml of N-dimethylformamide followed by washing with from about 100 to about 200 ml of acetone in a suction filter. After removing the majority of the solvents, the resulting Type V HOGaPc pigment was vacuum dried at from about 50° C to about 100° C for a time from about 6 to about 48 hours. Four samples were prepared. The X-ray diffraction (XRD) of the resulting Type V HOGaPc was obtained using a Siemens D5000 x-ray diffractometer.

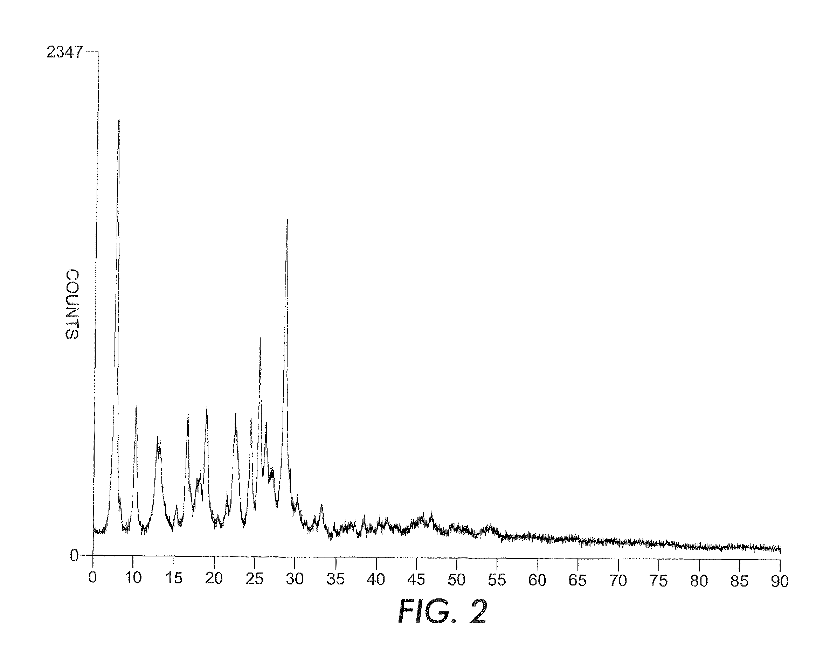

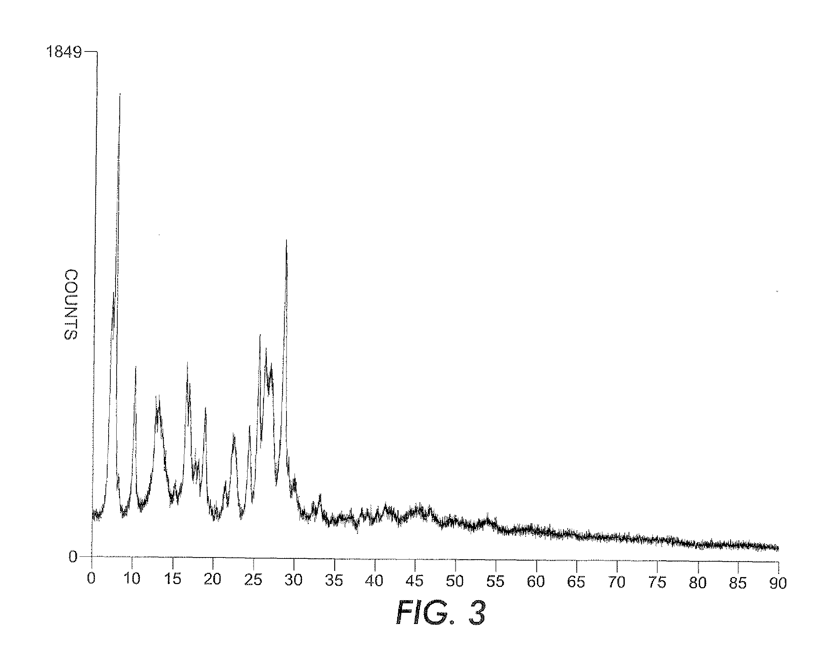

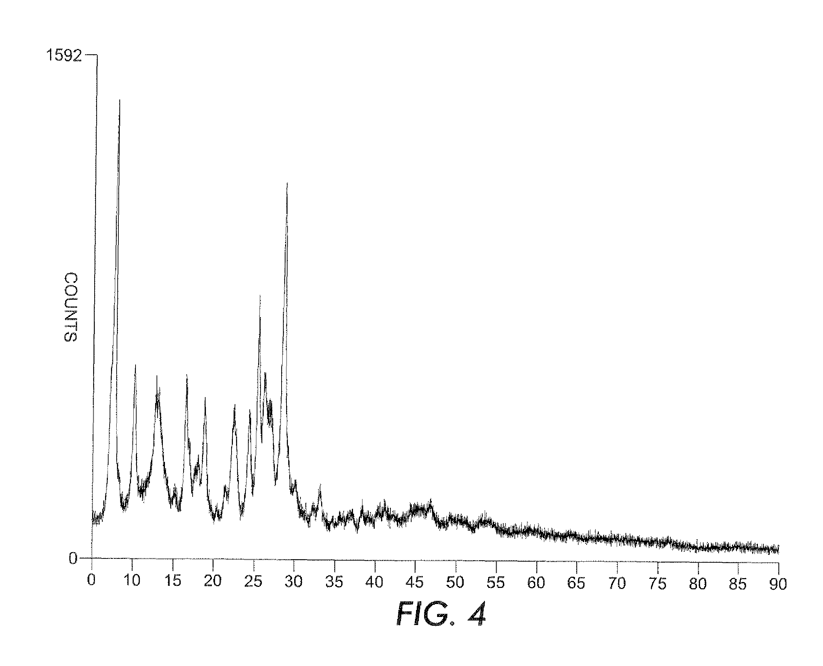

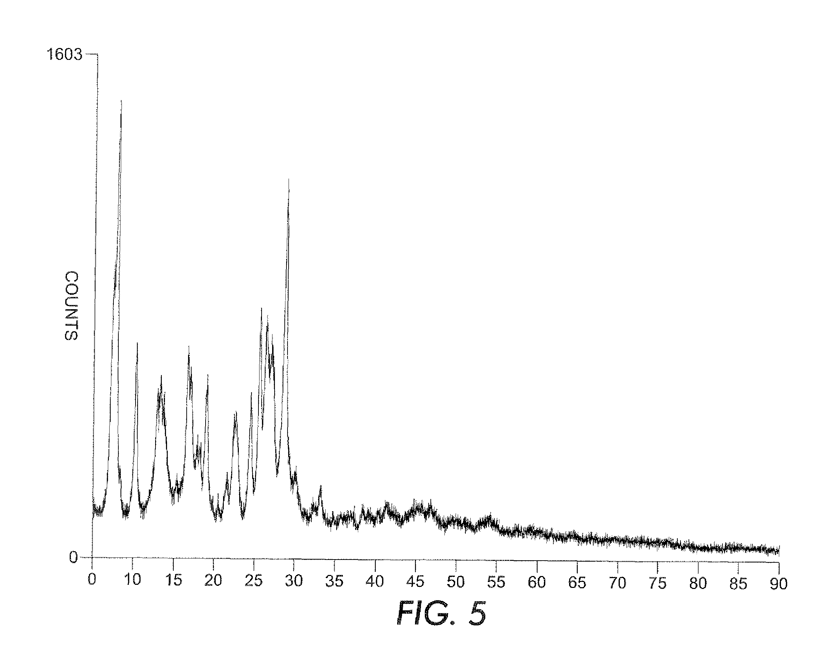

The x-ray diffraction spectra obtained for the samples are set forth in Figures 2-5. The sample in Figure 2 was prepared by the methods described above having sonocrystallization in DMF/acetone for about 30 minutes; the sample in Figure 3 was prepared by the methods described above with sonocrystallization in DMF for about 30 minutes; the sample in Figure 4 was prepared by the methods described above with sonocrystallization in DMF/acetone for about 60 minutes; the sample in Figure 5 was prepared by the methods described above in DMF with no sonocry stallization. As can be seen from the uniformity of the XRD spectra set forth in Figures 2-5, sonocrystallization did not interfere with the x-ray diffraction of the pigments and the integrity of the crystal structure of the pigments was maintained.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

## Claims

1. A process comprising:
contacting a gallium phthalocyanine in an acid solution with a basic aqueous media; and
contacting the resulting mixture with at least two solvents selected from at least two of the groups consisting of polar aprotic solvents, esters, and ketones.

2. A process in accordance with claim 1 wherein said gallium phthalocyanine is selected from the group consisting of halogallium phthalocyanines and alkoxy-bridged gallium phthalocyanines and the at least two solvents comprise from 2 to 7 solvents.

3. A process in accordance with claim 1 wherein the acid solution is selected from the group consisting of hydrogen halides and oxyacids of halogens, and the basic aqueous media comprises an aqueous hydroxide at a molar concentration of from 3 molar to 15 molar.

4. A process in accordance with claim 1 wherein the acid solution is selected from the group consisting of sulfuric acid, hydrochloric acid, hydrobromic acid, hydroiodic acid, chloric acid, perchloric acid, bromic acid, perbromic acid, iodic acid, periodic acid, nitric acid, and trifluoroacetic acid, and the basic aqueous media is selected from the group consisting of ammonia and aqueous sodium hydroxide at a molar concentration of from 6 molar to 10 molar.

5. A process in accordance with claim 1 wherein the polar aprotic solvent is selected from the group consisting of N,N-dimethylformamide, N-methylpyrrolidone, dimethyl sulfoxide, acetonitrile, and mixtures thereof, the ester is selected from the group consisting of n-butyl acetate, ethyl acetate, and mixtures thereof, and the ketone is selected from the group consisting of acetone, methyl ethyl ketone, methyl isobutyl ketone, and mixtures thereof.

6. A process in accordance with claim 1 wherein the at least two solvents comprise from 1 percent by weight to 99 percent by weight of a polar aprotic solvent, optionally in combination with from 99 percent by weight to 1 percent by weight of an ester, optionally in combination with from 5 percent by weight to 80 percent by weight of a ketone.

7. A process in accordance with claim 1 wherein the at least two solvents comprise from 20 percent by weight to 80 percent by weight of a polar aprotic solvent, optionally in combination with from 20 percent by weight to 50 percent by weight of an ester, optionally in combination with from 10 percent by weight to 67 percent by weight of a ketone.

8. A process in accordance with claim 1 wherein the at least two solvents are selected from the group consisting of N,N-dimethylformamide in combination with n-butyl acetate and N,N-dimethylformamide in combination with acetone.

9. A process in accordance with claim 1 further comprising milling the pigment slurry and solvent system for a period of time from 2 hours to 2 weeks, at a rolling speed from 30 rpm to 150 rpm, at a temperature from 0°C to 40°C wherein a Type V hydroxygallium phthalocyanine is formed having particles with a surface area of from 30 m²/g to 80 m²/g.

10. A photoreceptor comprising a photogenerating layer comprising a resin and a photogenerating component comprising a hydroxygallium phthalocyanine obtainable by the process according to any of claims 1 to 9.

11. The photoreceptor of claim 10, further comprising a charge transport layer, an optional hole blocking layer, and an optional adhesive layer.

12. The photoreceptor according to claim 10, wherein the hydroxygallium phthalocyanine is in the form of particles with a surface area of from 5 m²/g to 120 m²/g and major peaks at Bragg angles (2 theta ± 0.2°) of 7.2, 10, 16.8, 18.6, 24, 25.3, 26.8, 28.3, 32.5 and with the highest peak at 7.2 degrees.
